(19) Europäisches Patentamt / European Patent Office / Office européen des brevets

(11) **EP 3 218 893 B1**

(12) **EUROPÄISCHE PATENTSCHRIFT**

(45) Veröffentlichungstag und Bekanntmachung des Hinweises auf die Patenterteilung:
**30.01.2019 Patentblatt 2019/05**

(21) Anmeldenummer: **15794079.2**

(22) Anmeldetag: **30.10.2015**

(51) Int Cl.:
*G09C 1/00* *(2006.01)*

(86) Internationale Anmeldenummer:
**PCT/EP2015/002221**

(87) Internationale Veröffentlichungsnummer:
**WO 2016/074774 (19.05.2016 Gazette 2016/20)**

(54) **GEHÄRTETE WHITE BOX IMPLEMENTIERUNG**

HARDENED WHITE BOX IMPLEMENTATION

IMPLÉMENTATION EN BOÎTE BLANCHE DURCIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.11.2014 DE 102014016548**

(43) Veröffentlichungstag der Anmeldung:
**20.09.2017 Patentblatt 2017/38**

(73) Patentinhaber: **Giesecke+Devrient Mobile Security GmbH**
**81677 München (DE)**

(72) Erfinder:
• **DREXLER, Hermann**
**80337 München (DE)**
• **BAUER, Sven**
**85591 Vaterstetten (DE)**
• **PULKUS, Jürgen**
**80469 München (DE)**

(56) Entgegenhaltungen:
**US-A1- 2011 091 034    US-A1- 2012 300 922**

• CHOW S ET AL: "A White-Box DES Implementation for DRM Applications", INTERNET CITATION, 2002, XP002476832, Gefunden im Internet: URL:http://crypto.stanford.edu/DRM2002/whitebox.pdf [gefunden am 2008-04-16]
• CHOW S ET AL: "WHITE-BOX CRYPTOGRAPHY AND AN AES IMPLEMENTATION", INTERNET CITATION, 2002, XP002476831, Gefunden im Internet: URL:http://citeseer.ist.psu.edu/732354.htm l [gefunden am 2008-04-16]
• JOPPE W BOS ET AL: "Differential Computation Analysis: Hiding your White-Box Designs is Not Enough", INTERNATIONAL ASSOCIATION FOR CRYPTOLOGIC RESEARCH,, Bd. 20150731:144809, 31. Juli 2015 (2015-07-31), Seiten 1-22, XP061018972, [gefunden am 2015-07-31] in der Anmeldung erwähnt
• Alex Biryukov ET AL: "A Toolbox for Cryptanalysis: Linear and Affine Equivalence Algorithms" In: "Advances in Cryptology - EUROCRYPT 2003", 1 January 2003 (2003-01-01), Springer Berlin Heidelberg, Berlin, Heidelberg, XP055046205, ISBN: 978-3-54-014039-9 vol. 2656, pages 33-50, DOI: 10.1007/3-540-39200-9_3,

## Beschreibung

### Gebiet der Erfindung

Die Erfindung betrifft allgemein das technische Gebiet des Schützens von kryptographischen Algorithmen gegen Angriffe mittels White Box Kryptographie. Genauer betrifft die Erfindung eine Prozessor-Einrichtung mit einer White Box Implementierung eines kryptographischen Algorithmus, insbesondere einer Block-Chiffre, insbesondere des DES oder AES.

### Hintergrund der Erfindung

Unter einer Prozessor-Einrichtung im Sinn der Erfindung wird ein Gerät oder sonstiger Gegenstand mit einem Prozessor verstanden, beispielsweise ein mobiles Endgerät, wie z.B. ein Smartphone. Mehr und mehr werden auf mobilen Endgeräten, beispielsweise Smartphones, Softwareapplikationen - kurz Apps genannt - genutzt, um kryptographisch gesicherte digitale Transaktionen durchzuführen, beispielsweise zum bargeldlosen Bezahlen an einem NFC-Terminal oder zum Kauf einer Ware oder einer Dienstleistung bei einem Online-Versandhändler. Weiter werden auf mobilen Endgeräten wie z.B. Smartphones zunehmend Softwareapplikationen für kryptographische Dienste wie z.B. Sprachverschlüsselung oder Datenverschlüsselung genutzt. Die auf dem Prozessor des Smartphone implementierte Softwareapplikation interagiert zur Durchführung der Transaktion bzw. des Dienstes mit einem Terminal bzw. Server. Kryptographische Teilaufgaben der Softwareapplikationen wie z.B. Verschlüsselung, Entschlüsselung, Signaturbildung oder Signaturverifizierung werden durch Implementierungen kryptographischer Algorithmen durchgeführt. Durch den kryptographischen Algorithmus verwendete sicherheitskritische Daten, z.B. PINs, Passwörter, kryptographische Schlüssel etc. werden gesichert für die Prozessor-Einrichtung bereitgestellt. Traditionell werden sicherheitskritischen Daten, um sie vor einem Angriff durch unbefugte Person zu schützen, durch (Grey Box) Kryptographie gesichert. Hierzu werden die Daten auf einem Hardware-technisch eigenständigen Sicherheitselement des mobilen Endgeräts bereitgestellt, beispielsweise einer aus dem mobilen Endgerät herausnehmbaren SIM-Karte.

Ein alternativer Ansatz, der insbesondere auch für mobile Endgeräte anwendbar ist, die kein eigenständiges Sicherheitselement haben, basiert auf der White Box Kryptographie. Bei einer White Box Implementierung eines kryptographischen Algorithmus wird versucht, die sicherheitskritischen Daten, insbesondere geheime kryptographische Schlüssel, derart in der Implementierung zu verbergen, dass ein Angreifer, der vollen Zugriff auf die Implementierung hat, nicht dazu in der Lage ist, die sicherheitskritischen Daten aus der Implementierung zu extrahieren. Eine White Box Implementierung des AES-Kryptoalgorithmus (AES = Advanced Encryption Standard) ist beispielsweise aus der Veröffentlichung [1] "A Tutorial on White-box AES" von James A. Muir, Cryptology ePrint Archive, Report 2013/104 bekannt. Ebenso werden White Box Implementierungen von kryptographischen Algorithmen bzw. Routinen kommerziell vertrieben.

Eine ideale White Box Implementierung eines Krypto-Algorithmus hält sicherheitskritische Daten wie kryptographische Schlüssel so verborgen, dass sie durch einen Angriff nicht ermittelbar sind.

In der Patentanmeldung DE 102014016548.5 der Anmelderin der vorliegenden Patentanmeldung ist ein Verfahren zum Testen einer auf einem Prozessor ausführbaren White Box Implementierung, eines kryptographischen Algorithmus, z.B. AES, beschrieben, mit dem es den Erfindern gelungen ist, sicherheitskritische Daten durch einen Angriff zu ermitteln, was gemäß dem Konzept der White Box eigentlich nicht möglich sein sollte. Unter diesem Aspekt sind die getesteten White Box Implementierung auf Grund ihrer Angreifbarkeit definitionsgemäß nicht mehr perfekt White Box, werden aber auf Grund ihrer Zielsetzung perfekt zu sein nachfolgend weiterhin als White Box Implementierungen bezeichnet.

102014016548.5 beschreibt genauer ein Testverfahren bei einer White Box Implementierung, die mittels eines geheimen Schlüssels aus einem Plaintext einen Ciphertext erzeugt und auf dem Prozessor in Form von Maschinenbefehlen vorliegt, wobei der Prozessor wenigstens ein Register umfasst. Dabei umfasst das Verfahren die folgenden Schritte: (a) das Einspeisen eines Plaintexts einer Vielzahl von Plaintexten in die White Box-Implementierung; (b) das schrittweise Auslesen und Abspeichern des Inhalts des wenigstens einen Registers des Prozessors beim schrittweise Abarbeiten der Maschinenbefehle der White Box Implementierung, wobei beim schrittweise Abarbeiten der Maschinenbefehle der White Box Implementierung Zwischenergebnisse erzeugt werden können; (c) das N-malige Wiederholen der Schritte (a) und (b) mit einem weiteren Plaintext der Vielzahl von Plaintexten; und (d) das statistische Auswerten der Inhalte der Register und der Plaintexte, der Zwischenergebnisse und/oder der aus den Plaintexten erzeugten Ciphertexte, indem nach Korrelationen zwischen den Inhalten der Register und den Plaintexten, den Zwischenergebnissen und/oder den Ciphertexten gesucht wird, um den geheimen Schlüssel zu ermitteln.

Überraschenderweise hat sich bei den Untersuchungen der Erfinder gezeigt, dass sich bei kommerziell erhältlichen unter der Bezeichnung White Box Implementierung vertriebenen Implementierungen von kryptographischen Algorithmen der geheime Schlüssel mittels des in 102014016548.5 beschriebenen Verfahrens ableiten lässt.

In der Fachveröffentlichung [3] "Differential Computation Analysis: Hiding your White-Box Designs is Not Enough", J.W. Bos, Ch. Hubain, W. Michiels, and Ph. Teuwen, eprint.iacr.org/2015/753, der Firma NXP ist ein ähnliches Testverfahren offenbart wie in der oben angeführten Patentanmeldung 102014016548.5, mit dem sich ebenfalls aus einer White Box Implementierung eines Krypto-Algorithmus der geheime Schlüssel mit statistischen Methoden ermitteln ließ.

In der Patentanmeldung 102014016548.5 wird weiter eine Handlungsanleitung für ein Verfahren zum Härten der auf einem Prozessor ausführbaren White Box Implementierung eines kryptographischen Algorithmus bereitgestellt. Dabei ist, um das Härten zu erzielen, die White Box Implementierung derart ausgestaltet, dass bei der Erzeugung des Ciphertextes wenigstens eine Lookup-Tabelle zum Einsatz kommt, um statisch Eingabewerte der Lookup-Tabelle auf Ausgabewerte der Lookup-Tabelle abzubilden. Das Verfahren umfasst den Schritt, dass die Lookup-Tabelle derart statistisch permutiert wird, dass die einzelnen Bits der permutierten Lookup-Tabelle im Wesentlichen nicht mit den Bits der Lookup-Tabelle korrelieren. Mit anderen Worten: die Lookup-Tabelle T wird derart mittels einer invertierbaren Abbildung f (dort als Permutation P bezeichnet) statistisch permutiert, dass die einzelnen Bits der permutierten Lookup-Tabelle $T'(x) = f(T(x))$ bei zufällig variierendem Input x nicht mit den Bits $T(x)$ korrelieren. Diese Implementierung entspricht dem Oberbegriff von Anspruch 1.

Das Dokument [5] CHOW S ET AL, "A White-Box DES Implementation for DRM Applications", INTERNET CITATION, (2002), URL: http://crypto.stanford.edu/DRM2002/whitebox.pdf, (20080416), XP002476832 offenbart eine White-Box Implementierung des kryptographischen Algorithmus DES, die für DRM Applikationen vorgesehen ist.

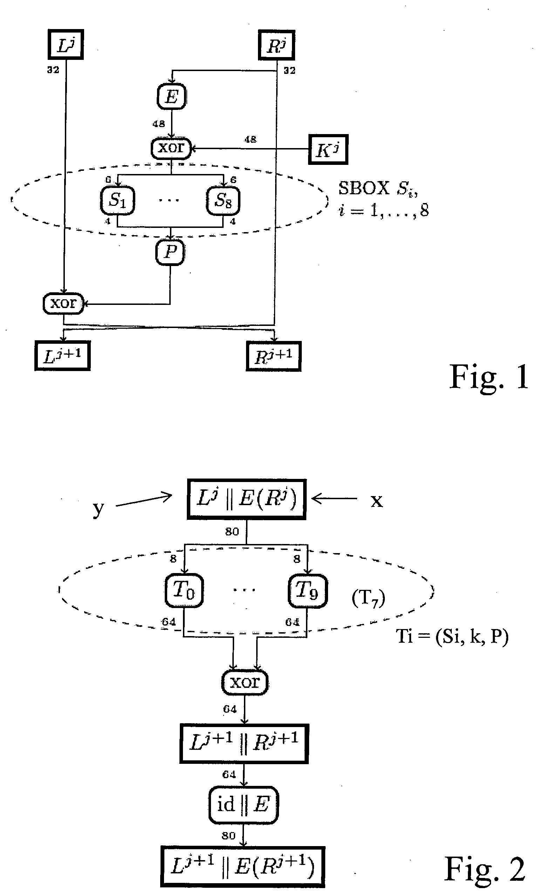

Das Dokument [4] US 2012/300922 A1 offenbart, aufsetzend auf dem oben zitierten Dokument [5], eine Prozessor-Einrichtung mit einer darauf implementierten ausführbaren White Box maskierten Implementierung eines kryptographischen Algorithmus. Wie in Fig. 2A von [4] zu sehen ist, werden zur White Box Maskierung des Algorithmus zunächst in einem Schritt "GEN" Verschleierungswerte r und s erzeugt. Anschließend wird eine Kodierung C gleichermaßen auf Eingangswerte X des Algorithmus und auf Verschleierungswerte r, bzw. gleichermaßen auf Ausgangswerte Y des Algorithmus und auf Verschleierungswerte s angewandt.

Dokument [6] CHOW S ET AL, "WHITE-BOX CRYPTOGRAPHY AND AN AES IMPLEMENTATION", INTERNET CITATION, (2002), URL: http://citeseer.ist.psu.edu/732354.html, (20080416), offenbart eine White Box maskierte Implementierung des Algorithmus AES.

Das Dokument [7] US 2011/091034 A1 aus dem Stand der Technik offenbart ein Verfahren zur kryptographischen Verarbeitung eines Eingangsdatums, um eine Ausgangsdatum zu erzeugen, z.B. in einem Algorithmus wie DES oder AES, wobei, um DPA-Angriffe abzuwehren, eine im Algorithmus vorgesehene Operation, z.B. eine S-Box-Operation, in auf geheime Weise modifizierter Form angewandt wird.

Zwei wichtige theoretische Designkriterien beim Entwurf eines Kryptoalgorithmus, der einen Plaintext mit einem Schlüssel zu einem Ciphertext verarbeitet, sind Diffusion und Konfusion. Perfekte Diffusion bedeutet, dass jedes Ciphertextbit abhängig ist von allen Plaintextbits und allen Schlüsselbits. Konfusion bedeutet Anwendung eines möglichst komplexen Zusammenhangs zwischen Plaintext, Ciphertext und Schlüssel. Diffusion wird häufig durch Anwendung von affinen Abbildungen, insbesondere linearen Abbildungen, erzeugt. Gute Konfusion wird insbesondere, aber nicht nur, bei Anwendung nichtlinearer Abbildungen erzielt. Die Funktion f, mit welcher ein Rechenschritt wie z.B. eine White Box Operation $S[x]$ verschleiert wird, sollte auch die Designkriterien Diffusion und Konfusion erfüllen. Generell sind affine, insbesondere lineare, Abbildungen vergleichsweise einfach zu bearbeiten. Abbildungen nicht näher spezifizierten Typs können aufwändig zu verarbeiten sein, und nichtlineare Abbildungen sind definitiv aufwändiger zu verarbeiten als affine, insbesondere lineare, Abbildungen.

Der Erfindung liegt die Aufgabe zugrunde, eine Prozessor-Einrichtung mit einer Implementierung eines kryptographischen Algorithmus anzugeben, die aufbauend auf einer wie der in 102014016548.5 angegebenen oder einer vergleichbaren Implementierung speziell gehärtet ist, indem in der Implementierung Ausgabewerte von Rechenschritten (z.B. S-Box-Operationen), d.h. Zwischenschritte im Algorithmus, möglichst wenig oder nicht mit Ausgabewerten, wie sie bei ungeschützten Implementierungen erwartet werden würden, korreliert sind, so dass auch mittels auf Seitenkanal-Ausgaben angewandter statistischer Methoden keine geheime Information aus dem Algorithmus gewonnen werden kann. Insbesondere sollen spezielle Implementierungsdetails angegeben werden, mittels derer eine speziell gehärtete Implementierung erreicht werden kann.

Zusammenfassung der Erfindung

Die Aufgabe wird durch eine Prozessor-Einrichtung nach Anspruch 1 gelöst. Ausführungsformen der Erfindung sind in den abhängigen Ansprüchen angegeben.

Die Prozessor-Einrichtung nach Anspruch 1 ist mit einer darauf implementierten ausführbaren White Box maskierten Implementierung eines kryptographischen Algorithmus ausgestattet. Der Algorithmus ist eingerichtet, unter Verwendung eines geheimen Schlüssels K aus einem Eingabetext einen Ausgabetext zu erzeugen. Die Implementierung umfasst einen implementierten Rechenschritt S des Algorithmus, durch welchen Rechenschritt S Eingabewerte x auf Ausgabewerte $s = S[x]$ abgebildet werden, und der mittels einer invertierbaren Funktion f zu einem White Box maskierten Rechenschritt T' maskiert ist. Insoweit entspricht die Prozessor-Einrichtung derjenigen aus der Anmeldung 102014016548.5.

Die erfindungsgemäße Implementierung zeichnet sich dadurch aus, dass sie als gehärtete Implementierung gestaltet ist, wobei das Härten der Implementierung durch eine gezielte Konstruktion der Funktion f erreicht wird.

Um das Härten zu erzielen, sind die folgenden Maßnahmen vorgesehen. a) Als Abbildung f ist eine Kombination ($f = (c_1, c_2, ...) * A$) aus einer affinen Abbildung A mit einer Eingangsbreite BA und einer Anzahl von einer oder mehreren invertierbaren Abbildungen $c_1$, $c_2$,... mit je einer Eingangsbreite $Bc_1$, $Bc_2$,... vorgesehen, wobei $BA = Bc_1 + Bc_2 + ...$, wobei durch die Abbildung f Ausgabewerte w erzeugt werden. Eine derartige Zerlegung der Funktion f hat speziell im Fall mehrerer invertierbarer Abbildungen $c_1$, $c_2$, ... den Vorteil, dass jede einzelne Abbildung $c_i$, $i = 1, 2, ...$ eine schmalere Eingangsbreite hat als die gesamte Funktion f und die affine Funktion und somit einfacher zu handhaben ist.

Häufig werden affine, insbesondere lineare, Operationen in White-Box Implementierungen, die mit beliebigen invertierbaren, insbesondere nicht-linearen, verschleierten Rechenschritten durchgeführt werden, mittels Tabellenaufrufen umgesetzt. Die Tabellengröße und damit auch der Speicherbedarf der White-Box Implementierung wird durch die Eingangsbreite der beliebigen invertierbaren, insbesondere nicht-linearen, Abbildungen bestimmt. Deswegen ist es vorteilhaft, die Funktion f in eine affine, insbesondere lineare, Abbildung A und mehrere invertierbare, insbesondere nicht-lineare, Abbildungen $c_i$, $i = 1, 2, ...$ zu zerlegen. Die mehreren, z.B. eine Anzahl n, beliebigen invertierbaren bzw. nicht-linearen Abbildungen haben nur eine Eingangsbreite von $1/n$ der Eingangsbreite der affinen bzw. linearen Abbildung A. Die Anzahl der unterschiedlichen Elemente auf die die $c_i$, $i = 1, 2, ...$ angewandt werden, beträgt 2 ^Eingangsbreite. Somit wird der Speicherbedarf durch die Zerlegung drastisch reduziert. Die obenstehende Betrachtung zur Eingangsbreite von Tabellen wurde der Anschaulichkeit halber an Tabellen angestellt, gilt aber auf analoge Weise für die Eingangsbreiten anders dargestellter Abbildungen. Somit ist durch die Zerlegung gemäß Schritt a) die Funktion f für die White Box Maskierung besser handhabbar gemacht.

    b) Die affine Abbildung A ist dazu eingerichtet, auf Ausgabewerte s des Rechenschritts S und zusätzlich auf einen oder mehrere von den Ausgabewerten s des Rechenschritts S statistisch unabhängige Verschleierungswerte y angewendet zu werden, gemäß $a = A(S[x], y) = A(s, y)$;

    c) Die ein oder mehreren invertierbaren Abbildungen $c_1$, $c_2$,... sind dazu eingerichtet, Ausgabewerte a der affinen Abbildung A auf Ausgabewerte w der Abbildung f abzubilden, gemäß $w = (c_1, c_2, ...)(A(s,y))$, wobei jedes $c_1$, $c_2$, ... insbesondere eine handliche schmale Eingangsbreite hat.

Die Erfindung zeichnet sich dadurch aus, dass d) die affine Abbildung A durch ein auf die invertierbaren Abbildungen $c_1$, $c_2$,... abgestimmtes Konstruktionsverfahren konstruiert ist, wobei:

    d1) die Ausgabewerte a der affinen Abbildung A als Konkatenation von Ausgabewerte-Teilen $a = a_1 | a_2 ...$ dargestellt werden und die Ausgabewerte w der Abbildung f als Konkatenation von Ausgabewerte-Teilen $w = w_1 | w_2 ...$ dargestellt werden, wobei die Ausgabewerte-Teile $a_1$, $a_2$ ... und $w_1$, $w_2$ ... jeweils dieselbe Eingangsbreite $Bc_1$, $Bc_2$ ... wie die invertierbaren Abbildungen $c_1$, $c_2$,... besitzen;

    d2) ein Eingabewert $x=x_i$ festgelegt wird; und

    d3) die affine Abbildung A derart ausgewählt oder gebildet ist, dass - bei festgehaltenem Eingabewert $x_i$ - durch Anwenden von A auf $s = S[x_i]$ mit allen möglichen Verschleierungswerten y alle möglichen Ausgabewert-Teile $a_1$ oder/und alle möglichen Ausgabewert-Teile $a_2$, ... der affinen Abbildung A erzeugt werden. Dass mit allen möglichen Verschleierungswerten y alle möglichen Werte der Ausgabewert-Teile $a_i$ erreicht werden, gilt zumindest für einen einzelnen der Ausgabewert-Teil $a_1$, $a_2$, .... Wahlweise gilt dies für jeden einzelnen Ausgabewert-Teil $a_1$, $a_2$, ....

Der Effekt, durch Anwenden aller möglichen y alle möglichen konkreten Werte des Ausgabewert-Teils $a_i$ (mit i ausgewählt aus 1, 2, ...) erreichen zu können, hat den Folge-Effekt, dass es nur eine einzige Menge M von Ausgabewert-Teilen $a_i$ gibt. Würden durch Durch-Variieren aller möglichen Verschleierungswerte y nur manche mögliche Werte des Ausgabewert-Teils $a_i$ erreicht, würden mehrere Mengen $M_i$ von Ausgabewert-Teilen $a_i$ gebildet. Untersuchungen der Erfinder haben ergeben, dass im Fall von mehreren Mengen von Ausgabewert-Teilen bei manchen möglichen Ausgestaltungen der invertierbaren Funktionen $c_1$, $c_2$, ... der Schlüssel K des Algorithmus ausgespäht werden kann. Folglich, und wie in einer anderen Anmeldung beschrieben, müsste für die invertierbaren Funktionen ein spezielles Konstruktions- oder Auswahlverfahren vorgenommen werden. Mit der hier vorgeschlagenen Lösung lässt sich vermeiden, dass die invertierbaren Lösungen $c_1$, $c_2$, ... speziell konstruiert oder ausgewählt werden müssen, sondern alle möglichen invertierbaren Funktionen $c_1$, $c_2$, ... sind geeignet.

Die erfindungsgemäß gestaltete affine Abbildung A ist insbesondere so gestaltet, dass die Ausgabewerte der affinen Abbildung A statistisch ausgeglichen sind, und die statistische Ausgeglichenheit durch die invertierbaren Funktionen $c_1$, $c_2$, ..., unabhängig von der konkreten Auswahl der $c_1$, $c_2$, ... , beibehalten wird. Hierdurch ist in Folge auch ein Ausgabeergebnis der Funktion f statistisch ausgeglichen.

Indem die Funktion f unter Verwendung einer derart gestalteten affinen Abbildung A konstruiert wird, wird erzielt, dass die einzelnen Bits des maskierten Rechenschrittes T' im Wesentlichen nicht mit den Bits des unmaskierten Rechenschrittes S korrelieren. Somit lassen sich aus der Aufnahme von Seitenkanal-Ausgaben des Rechenschritts und Anwendung statistischer Methoden auf die Seitenkanal-Ausgaben keine Informationen über den kryptographischen Schlüssel gewinnen.

Daher ist gemäß Anspruch 1 eine Prozessor-Einrichtung mit einer speziell gehärteten Implementierung geschaffen, die Ausgabewerte von Rechenschritten, d.h. Zwischenergebnisse, der Implementierung so schützt, dass auch mittels auf Seitenkanal-Ausgaben angewandter statistischer Methoden keine geheime Information aus dem Algorithmus gewonnen werden kann. -> Unteransprüche zu A abgestimmt auf c1, c2, ...

Wahlweise sind als invertierbare Abbildungen c1, c2, ... komplexe Abbildungen vorgesehen, durch welche Konfusion erzeugt wird. Wahlweise sind als invertierbare Abbildungen c1, c2, ... insbesondere nicht-lineare Abbildungen vorgesehen, so dass ein hohes Maß an Konfusion erzeugt wird.

Wahlweise wird die Anzahl der Verschleierungswerte y gleich der (hier für alle ci identischen) Eingangsbreite Bc1= Bc2= ... der invertierbaren Abbildungen c1, c2, ... festgesetzt, und Merkmal d3) umfasst, dass die affine Abbildung A so in Teil-Abbildungen P1, Q1, P2, Q2, ... zerlegt wird, dass gilt: a1(x,y) = P1(x) +Q1(y), a2(x,y) = P2(x) +Q2(y) ..., wobei Q1, Q2 ... invertierbare Abbildungen sind. Dadurch dass Q1, Q2 ... invertierbare Abbildungen sind, wird erreicht, dass, bei Durch-Variieren aller möglichen Verschleierungswerte y bei festgehaltenem x, alle möglichen Ausgabwerte ai der affinen Abbildung erzeugt werden und somit für alle möglichen festgehaltenen x-Werte die Menge der möglichen Ausgabewerte ai in derselben Menge liegen. Hierdurch wird mit allen beliebigen invertierbaren Abbildungen c1, c2, ... erreicht, dass die einzelnen Bits des maskierten Rechenschrittes T' im Wesentlichen nicht mit den Bits des unmaskierten Rechenschrittes S korrelieren.

Wahlweise umfasst die affine Abbildung A eine lineare Abbildung, die durch eine Matrix MA gebildet ist, die in Spalten und Zeilen organisiert ist. Die Ausgabewerte s des Rechenschritts S sind einer Anzahl n von Spalten N in der Matrix MA zugeordnet. Die statistisch unabhängigen Verschleierungswerte y sind einer Anzahl m von - von den Spalten N getrennten - Spalten M in der Matrix MA zugeordnet. Die Anzahl m Spalten M für die Verschleierungswerte y ist gleich der Anzahl m der Verschleierungswerte y. Die Matrix MA umfasst eine invertierbare Teilmatrix, die gebildet ist: durch diejenigen m Spalten M der Matrix MA, die den Verschleierungswerten y zugeordnet sind, und dieselbe Anzahl m von zueinander benachbarten Zeilen der Matrix MA; insbesondere durch die letzten m Spalten M der Matrix MA in Kombination mit entweder den ersten, zweiten, ... oder letzten m Zeilen der Matrix MA. Die zuvor geforderte invertierbare Abbildung ist bei dieser Ausführungsform als invertierbare Teilmatrix gestaltet.

Wahlweise ist die Anzahl der Verschleierungswerte y gleich vier oder ein ganzzahliges Vielfaches von vier, insbesondere acht. Die invertierbare Teilmatrix ist dabei gebildet durch die letzten vier Spalten der Matrix MA und zudem und die ersten, oder die zweiten, oder die dritten ... oder die letzten vier Zeilen der Matrix MA, oder dem ganzzahligen Vielfachen entsprechend mehrere derartige Gruppen von vier Spalten und vier Zeilen.

→ Unteransprüche zu A

Als affine Abbildung ist wahlweise eine Abbildung vorgesehen, durch die Diffusion erzeugt wird, beispielsweise eine lineare Abbildung oder eine eine lineare Abbildung umfassende Abbildung.

Die affine Abbildung A umfasst wahlweise eine lineare Abbildung, die durch eine Matrix MA gebildet ist, die in Spalten und Zeilen organisiert ist, wobei die Ausgabewerte s des Rechenschritts S und die statistisch unabhängigen Verschleierungswerte y in der Matrix MA getrennten Spalten zugeordnet sind. Eine solche getrennte Anordnung erhöht die Übersichtlichkeit.

Im Folgenden werden, über die spezielle Ausgestaltung der affinen Abbildung hinaus, weitere vorteilhafte Ausgestaltungen betrachtet.

-> Weitere Unteransprüche

Wahlweise wird für die Durchführung des Implementierens des White Box maskierten Rechenschritts T' eine den Rechenschritt S darstellende Look-Up Tabelle STab[x] dargestellt. In diesem Fall werden die Verschleierungswerte y separat bereitgestellt. Alternativ wird eine den Rechenschritt S und die Verschleierungswerte y darstellende Look-Up Tabelle STab[x,y] bereitgestellt, so dass ein separates Bereitstellen der Verschleierungswerte entfällt.

Wahlweise ist der White Box maskierte Rechenschritt T' durch eine White Box maskierte Look-Up Tabelle T'Tab [x, y] dargestellt, in der Werte f(s, y) eingetragen sind, insbesondere das Ergebnis der Anwendung der ein oder mehreren invertierbaren Abbildungen c1, c2,... auf A(s, y).

Wahlweise umfasst die Implementierung zusätzlich eine weitere, auf Eingabewerte x des Rechenschritts S, oder auf Eingabewerte x des Rechenschritts S und auf Verschleierungswerte y, gemäß $g^{-1}(x)$ bzw. $g^{-1}(x, y)$ anzuwendende invertierbare Funktion g.

Wahlweise ist als Algorithmus eine Block-Chiffre mit mehreren Runden vorgesehen, insbesondere DES oder AES, und als Rechenschritt S:

- eine oder mehrere SBox-Operationen oder eine oder mehrere inverse SBox-Operationen, jeweils einer Runde; oder
- eine Kombination aus einer oder mehreren SBox-Operation oder einer oder mehreren inversen SBox-Operation, jeweils einer Runde, mit ein oder mehreren weiteren Operationen der Runde.

Als Eingabewert x ist bzw. sind wahlweise entweder ein oder mehrere expandierte rechte Eingangs-Bits r'i (r'1 | r'2 | ...) einer Runde, oder eine Verknüpfung (x = r'1 XOR k1 | r'2 XOR k2 | ....) eines oder mehrerer expandierter rechter Eingangs-Bits r'i einer Runde mit einem bzw. mehreren Schlüsselbits ki vorgesehen.

Nachfolgend werden bevorzugte Ausgestaltungsmöglichkeiten von Implementierungen dargelegt, bei denen als Algorithmus der Data Encryption Standard DES vorgesehen ist.

Bei Implementierungen mit Algorithmus DES ist bzw. sind als Verschleierungswert y wahlweise ein oder mehrere linke Eingangs-Bit li der Runde vorgesehen. Dies ist z.B. bei den DES- Darstellung aus Fig. 1 der Fall.

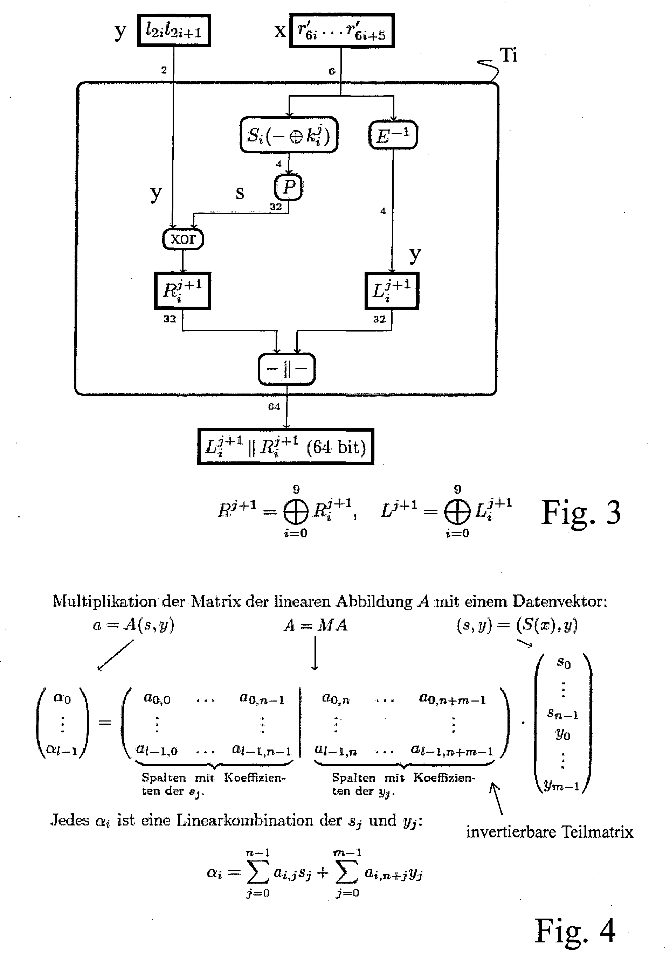

Bei Algorithmus DES sind weiter wahlweise die Verschleierungswerte y mittels einer Funktion V aus ein oder mehreren linken Eingangs-Bits li der Runde oder/ und aus ein oder mehreren expandierten rechten Eingangs-Bit r'i der Runde berechnet. Dies ist z.B. bei der alternativen DES-Darstellung aus Fig. 2, 3 der Fall.

Bei Algorithmus DES mit einem Rechenschritt S, der als eine kombinierte Operation T mit weiteren Operationen implementiert ist, umfassen wahlweise die weiteren Operationen eine oder mehrere der folgenden: Permutation P; Expansion E; Addition von linken und rechten Eingangs-Bits 1, r oder linken und expandierten rechten Eingangsbits 1, r'.

Falls als Algorithmus AES vorgesehen ist, ist als Eingabewert x wahlweise ein Eingabewert oder Teil eines Eingabewerts einer AddRoundKey-Operation oder einer SubBytes-Operation oder einer inversen SubBytes-Operation einer AES-Runde vorgesehen.

Bei Algorithmus AES sind wahlweise die Verschleierungswerte y jeweils mittels einer Funktion V berechnet.

Bei Algorithmus AES umfassen wahlweise die weiteren Operationen eine oder mehrere der folgenden: MixColumn-Operation oder ein oder mehrere Teilschritte der MixColumn-Operation oder inverse MixColumn-Operation oder ein oder mehrere Teilschritte der inversen MixColumn-Operation.

Wahlweise sind die Verschleierungswerte y jeweils mittels einer Funktion V aus Bits des Eingabetexts berechnet.

Der Algorithmus weist wahlweise mehrere Runden auf, wobei die Funktion V für jede Runde neu gewählt wird.

Wahlweise ist V eine lineare Abbildung oder eine Hashfunktion.

Wahlweise ist der Rechenschritt S mittels eines Implementierungs-Verfahrens als White Box maskierter Rechenschritt T' auf der Prozessor-Einrichtung implementiert worden. Wahlweise ist der White Box maskierte Rechenschritt T' dadurch in White Box maskierter Form auf der Prozessor-Einrichtung implementiert worden, dass: (i) der (unmaskierte) Rechenschritt S durchgeführt worden ist, um Ausgabewerte s zu erzeugen, und (ii) auf die erzeugten Ausgabewerte s des Rechenschritts S die invertierbare Funktion f angewandt worden ist, und ein hierdurch erzieltes Ergebnis auf der Prozessor-Einrichtung implementiert worden ist. Beim Anwenden der invertierbaren Funktion f wurden insbesondere die affine Abbildung A und die invertierbaren Abbildungen c1, c2, ... angewandt.

Wird die Prozessor-Einrichtung in Betrieb genommen und dadurch der kryptographische Algorithmus ausgeführt, z.B. innerhalb einer SoftwareApplikation, dann werden White Box maskierten Operationen T' (z.B. Ti', vgl. insbesondere Ausführungsform aus Fig. 4) ausgeführt. Durch das Ausführen der White Box maskierten Operationen T' werden die Rechenschritte S (insbesondere z.B. die DES-spezifischen S-Box Operationen) in gehärteter White Box maskierter Form ausgeführt. Da in der Prozessor-Einrichtung die Rechenschritte S (z.B. S-Boxen) nicht in direkter Form implementiert sind, sondern lediglich die erfindungsgemäß zu T' White Box maskierten Rechenschritte S, sind Angriffe auf die Prozessor-Einrichtung verhindert oder zumindest erheblich erschwert. Das Gleiche gilt, wenn der Rechenschritt S (z.B. S-Box) in einen kombinierten Rechenschritt T eingebettet ist (vgl. Fig. 2, 3). Auch der kombinierte Rechenschritt T ist nie direkt sondern stets nur in White Box maskierter Form T' in der Prozessor-Einrichtung implementiert.

Kurze Beschreibung der Zeichnungen

Im Folgenden wird die Erfindung an Hand von Ausführungsbeispielen und unter Bezugnahme auf die Zeichnungen näher erläutert, in der zeigen:

Fig. 1    eine DES-Runde in Standard-Darstellung, nach dem Stand der Technik, geeignet als Grundlage der Erfindung;

Fig. 2    eine DES-Runde in einer alternativen Darstellung, mit in Operationen T eingebetteten S-Box-Operationen S, und speziell geeignet als Grundlage der Erfindung;

Fig. 3    eine Detaildarstellung einer einzelnen Operation T in der DES-Runde aus Fig. 2;

Fig. 4    einen ersten Teil einer White Box Maskierung einer DES-Runde nach Fig. 1, oder nach Fig. 2 und Fig. 3, durchgeführt durch Anwendung einer affinen Abbildung A, gemäß Ausführungsformen der Erfindung;

Fig. 5    eine in eine affine Abbildung A und zwei invertierbare Abbildungen c1 und c2 zerlegt Funktion f zur White Box Maskierung einer DES-Runde nach Fig. 1, oder nach Fig. 2 und Fig. 3, auf für unterschiedliche Eingabewerte x1, x2, x3 erzielte S-Box-Ausgabewerte s(x1), s(x2), s(x3) ..., gemäß Ausführungsformen der Erfindung.

Detaillierte Beschreibung von Ausführungsbeispielen

Fig. 1 zeigt eine DES-Runde, nach dem Stand der Technik. An Hand von Fig. 1 wird aufgezeigt, dass ein Rechenschritt S, wie er der Erfindung zu Grunde gelegt wird, beispielsweise eine S-Box-Operation oder die Gesamtheit der acht S-Boxen einer DES-Runde sein kann. Am Eingang einer DES-Runde werden 64 Bit Eingangsdaten in 32 Bit linke Seite L=lj, j=0,...,31 und 32 Bit rechte Seite R=rj, j=0,...31 aufgeteilt. Die Bits der rechten Seite R werden mittels einer Expansions-Operation zu 48 Bit expandierten Eingangsdaten E=r'j, j=0,...47 der rechten Seite expandiert. Die 48 Bit expandierte Eingangsdaten E werden mit 48 Bit Schlüsseldaten K=kj, j=0,...47 mittels einer XOR-Operation verknüpft zu Eingabewerten xj = rj XOR kj, j=0,...47 für acht S-Boxen S. Jede der acht S-Boxen S = S1, ... S8 verarbeitet sechs Bit Eingabewerte xj zu je vier Bit Ausgabewerten sj. Die vier Bit breiten Ausgabewerte sj der acht S-Boxen S = S1, ... S8 werden einer Permutations-Operation P zugeführt. Die Ausgabewerte der Permutation P werden mit Bits der linken Seite verXORt und der nächsten DES-Runde zugeführt. Beim Standard-DES endet die DES-Runde hier.

Erfindungsgemäß, und wie in Fig. 4 dargestellt, wird auf die DES S-Box Si (gestrichelt eingekreister Bereich in Fig. 1) ein erster Teil einer White Box Maskierung angewandt, indem eine affine Abbildung A, die eine lineare Abbildung MA umfasst oder im Spezialfall auch durch eine lineare Abbildung MA gebildet ist, angewandt wird.. Für den ersten Teil der White Box Maskierung werden die Ausgabewerte sj der S-Boxen einer Matrix MA zugeführt, durch welche die lineare Abbildung in der affinen Abbildung A dargestellt ist, gemäß a = A(S[x]) = MA(S[x]). Weiter werden der Matrix MA, zusätzlich zu den Ausgabewerten sj der S-Boxen, statistisch unabhängige Werte y zugeführt, beispielsweise zwei oder mehr Bits lj, j=0,...31 der linken Seite der 64 Bit Eingangsdaten am Eingang der DES-Runde. Um, gemäß einer besonders vorteilhaften Ausführungsform der Erfindung, bereits in diesem ersten Maskierungsschritt eine spezielle Härtung der White Box Maskierung zu erreichen, ist die Matrix MA so gestaltet, dass die zusätzlich zu den S-Box-Ausgabewerten sj eingehenden Werte y statistisch unabhängig sind von den S-Box-Ausgabewerten sj, und dass jedes Bit in den Ausgabewerten w der Matrix MA von mindestens einem Bit aus den Verschleierungswerten y abhängt. Alternativ sind andere Ausgestaltungen der Matrix MA möglich.

Im Folgenden wird anhand von Fig. 2 und Fig. 3 eine zur Implementierung der Erfindung besonders geeignete einer alternativen Darstellung einer DES-Runde dargelegt, in welcher die für eine DES-Runde spezifischen Operationen S-Box-Operation S und Permutation P in einer kombinierten Operation T zusammengefasst sind. Hierbei wird der erste Teil der White Box Maskierung mit der Abbildung A, oder konkret mit der Matrix MA, auf die kombinierte Operation T, in welcher die S-Box-Operation enthalten ist, angewandt (siehe Fig. 4).

Fig. 2 zeigt eine DES-Runde in einer alternativen Darstellung, speziell geeignet für die Anwendung einer White Box Maskierung gemäß der Erfindung. Am Eingang der DES-Runde werden, zunächst wie gemäß Fig. 1,64 Bit Eingangsdaten in 32 Bit linke Seite L=lj, j=0,...,31 und 32 Bit rechte Seite R=rj, j=0,...31 aufgeteilt und die Bits der rechten Seite expandiert auf 48 Bit E(Rj). Bei der alternativen Darstellung aus Fig. 2 werden zwei oder mehr Bits aus den 32 Bit L=lj, j=0,...,31 der linken Seite der Runden-Eingangsdaten als Verschleierungsweite y verwendet. Hierdurch werden bei der Ausführung der DES-Runde die DES-spezifischen acht S-Box-Operationen dadurch ausgeführt, dass eine Mehrzahl von acht oder zehn kombinierten Operationen T = T0, ... T7 bzw. T0, ... T9 durchgeführt wird, in welchen die S-Box-Operationen S = S1, ... S8 mit umfasst sind.

Fig. 3 zeigt die Detailstruktur einer einzelnen kombinierten Operation T = Ti, i = 0, .... 7 (oder ggf. 0, ... 9) aus Fig. 2. (Optional zusätzlich vorhandenes Padding mit Null-Bits und Shifts sind in Fig. 3 zugunsten besserer Übersichtlichkeit weggelassen.) Im Unterschied zu den S-Boxen S der DES-Darstellung aus Fig. 1 sind in den kombinierten Operationen T = Ti aus Fig. 2 und Fig. 3 der Schlüssel kj und die DES-typische Permutation P bereits in die Operation T eingerechnet. Die S-Box mit dem eingerechneten Schlüssel kj ist in Fig. 3 durch das Operations-Kästchen Si(-XORkij) dargestellt, die Permutation durch P. Weiter werden vor dem Rechenschritt S, also vor den S-Box-Operationen S1,... S8, acht (oder zehn) Gesamttabellen T0, ... T7 (oder T0,...T9) erzeugt, in denen jeweils sechs Bit Eingangswerte xj = rj, j=0,...47 (nun nicht mit k verXORt, da die Schlüsselbits kj bereits in S enthalten sind) für die acht S-Boxen S und zwei Bit Verschleierungswerte lj, j=0,...,31 enthalten sind, und bei zehn Gesamttabellen Ti weitere Bits Verschleierungswerte lj, j=0,...,31 enthalten sind. Die zwei oder mehr, z.B. vier, Bit Verschleierungswerte lj werden hierbei nicht durch die S-Boxen verarbeitet. Die je sechs Bit Eingangswerte xj = rj XOR kj werden je durch eine S-Box verarbeitet. Somit liefern die Gesamttabellen Ti Ausgabewerte, die sowohl Ausgangswerte sj der S-Boxen als auch Verschleierungswerte lj enthalten.

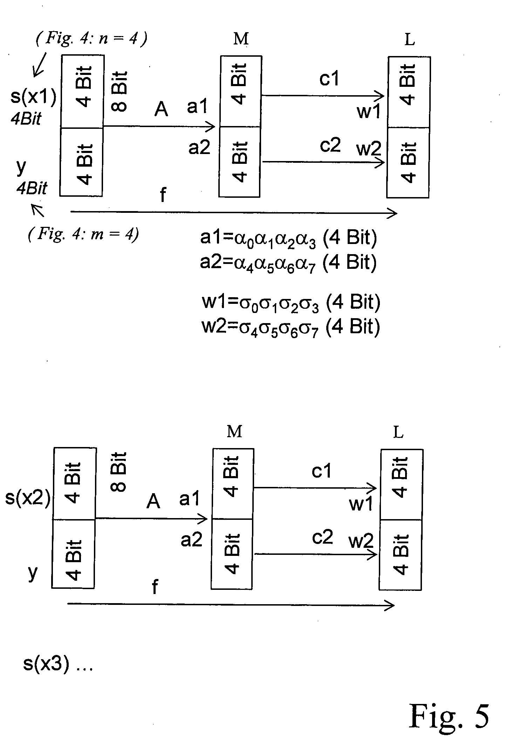

Wie in Fig. 4 dargestellt, wird der erste Teil der White Box Maskierung der Implementierung durchgeführt, indem die Ausgabewerte der kombinierten Operationen (Gesamttabellen) Ti der erfindungsgemäßen Matrix MA zugeführt werden, durch welche die erfindungsgemäße affine Abbildung A dargestellt ist. Hierbei werden sowohl die Ausgangswerte S(x) des Rechenschritts S, Bits des Eingangswerts x also Bits rj der rechten Seite, als auch die statistisch unabhängigen Werte y, d.h. die als Verschleierungswerte verwendeten Bits lj der linken Seite des DES-Runden-Eingangswerts, der Matrix MA zugeführt. Ein gesondertes Holen der statistisch unabhängigen Werte y = lj ist hierbei nicht erforderlich, da sie bereits in der kombinierten Operation T enthalten sind. Aus diesem Grund ist die DES-Darstellung aus Fig. 2 zur Implementierung der Erfindung besonders gut geeignet. Das Ergebnis der Maskierung sind partiell White Box maskierte Operationen. Diese partiell White Box maskierten Operationen werden nachfolgend noch mit invertierbaren Abbildungen c1, c2, ... maskiert zu (komplett) White Box maskierten Operationen Ti', i = 0, ... 9 oder i = 0, ... 7 (vgl. Fig. 5) und anschließend in die Prozessor-Einrichtung implementiert.

In der Ausführungsform aus Fig. 4 ist die in der zur White Box Maskierung verwendeten Abbildung f enthaltene affine Abbildung A als Matrix MA gestaltet, mit Koeffizienten aij, i = 0, ... 1-1, j = 0, ... n+m-1.

Die Matrix MA wird mit dem Eingangs-Vektor (s,y) multipliziert, der S-Box-Ausgangswerte s = S[x] (x sind z.B. Bits r der rechten Seite) und Verschleierungswerte y (z.B. Bits der linken Seite) enthält, um einen Ausgangs-Vektor a zu erzeugen. Die Summenformel in Fig. 4 verdeutlicht diesen Sachverhalt für eine einzelne Zeile i mit den Koeffizienten aij (j=0, ... n+m-1) der Matrix MA, und einen hiermit erzeugten einzelnen Eintrag $\alpha$i des Ausgangs-Vektors a. Im Eingangs-Vektor (s,y) sind in den oberen n Einträgen die S-Box-Ausgangswerte s und in den unteren m Einträgen die Verschleierungswerte y enthalten. In der Matrix MA sind entsprechend links die mit den S-Box-Ausgangswerte s = s0, ... sn-1 zu multiplizierenden n Koeffizienten aij, j = 0, ... n-1 von MA enthalten. Rechts in der Matrix MA sind die mit den Verschleierungswerten y = y0, ... ym-1 zu multiplizierenden m Koeffizienten aij, j = n, ... n+m-1 von MA enthalten.

Die Matrix MA ist erfindungsgemäß so konstruiert, dass durch die letzten m Spalten der Matrix MA, also die mit den Verschleierungswerten y = y0, ... ym-1 zu multiplizierenden m Koeffizienten aij, j = n, ... n+m-1 von MA, und die ersten (oder zweiten oder dritten ... oder letzten) m Zeilen der Matrix MA eine invertierbare Teilmatrix gebildet ist.

Hierdurch wird insbesondere der Effekt erzielt wir, dass die rechte Summe der Summengleichung für $\alpha$i (mit $\alpha$i sind einzelne Bits bezeichnet)

$$\sum_{j=0}^{m-1} a_{i,n+j} y_j$$

für keinen Zeilenindex i, i = 0, ... 1-1 verschwindet. Erreicht wird dieser Effekt dadurch, dass in jeder Zeile i mindestens einer der Koeffizienten ai,n+j, j=0, ... m-1, die mit den Verschleierungswerten y = yj, j=0, ... m-1 zu multiplizieren sind, von Null verschieden ist. Durch den Effekt wird sichergestellt, dass in keiner Zeile i, i = 0, ... 1-1 die Verschleierungswerte y im Ausgabe-Vektor a verschwinden, also in jeder Zeile i im Eintrag $\alpha$i des Ausgabe-Vektors a zumindest ein Verschleierungswert yj enthalten ist. Dies wiederum hat den weitergehenden Effekt, dass die Ausgabewerte a der affinen Abbildung A statistisch ausgeglichen sind.

Fig. 5 zeigt eine Funktion f zur White Box Maskierung einer DES-Runde nach Fig. 1, oder nach Fig. 2 und Fig. 3, gemäß Ausführungsformen der Erfindung. Die Funktion f ist in eine acht Bit breite affine Abbildung A und zwei jeweils vier Bit breite invertierbare Abbildungen c1 und c2 zerlegt. Die Funktion f wird auf vier Bit breite S-Box-Ausgabewerte s(x) und vier Bit breite Verschleierungswerte y angewandt. Im Bild von Fig. 4 ist also die Breite der S-Box-Ausgangswerte n = 4 und die Breite der Verschleierungswerte m = 4: Gemäß Fig. 5 werden nacheinander jeweils unterschiedliche Eingabewerte x = x1, x2, x3, ... festgesetzt und mit jedem Eingabewert x = x1, x2, x3, ... die Maskierung f = c(A(s(x),y)) durchgeführt.

Zunächst wird ein durch S-Boxen der DES-Runde zu verarbeitender Eingabewert x festgelegt. Fig. 5 zeigt drei solche festgelegte Eingabewerte x, nämlich x1, x2 und x3, für drei Durchführungen einer DES-Runden-Maskierung. Auf den Eingabewert x wird eine DES S-Box-Operation angewandt, so dass vier Bit s(x) erzeugt wird, d.h. vier Bit s(x1) bzw. s(x2) bzw. s(x3) etc..

Zudem werden vier Bit statistisch unabhängige Verschleierungswerte y bereitgestellt.

Für das jeweilige x = x1, x2, x3, ... werden also insgesamt acht Bit Daten bereitgestellt, nämlich vier Bit S-Box-Ausgabewerte s(x) und vier Bit Verschleierungswerte y als Eingabewerte für die affine Abbildung A (zB Matrix MA).

Die affine Abbildung A wird auf die vier Bit Ausgabewerte s(x) des Rechenschritts S und die vier Bit statistisch unabhängige Verschleierungswerte y angewendet, gemäß a = A(S[x], y) = A(s, y).

Durch die beiden invertierbaren Abbildungen c1, c2 werden Ausgabewerte a der affinen Abbildung A auf Ausgabewerte w der Abbildung f abgebildet, gemäß (w1, w2) = (c1, c2)((a1, a2) (s(x),y)) = (c1, c2)(A(S[x],y)).

Die Ausgabewerte a der affinen Abbildung A werden hierbei als Konkatenation von je vier Bit breiten Ausgabewerte-Teilen a = a1 | a2 dargestellt. Hierbei sei angemerkt, dass mit ai Ausgabewert-Teile bezeichnet sind, die ein oder mehrere Bit breit sind, wobei mit $\alpha$i einzelne Bits bezeichnet werden. Die Ausgabewerte w der Abbildung f werden als Konkatenation von Ausgabewerte-Teilen w = w1 | w2 dargestellt. Die Ausgabewerte-Teile a1, a2 und w1, w2 besitzen jeweils dieselbe Eingangsbreite Bc1, Bc2 wie die invertierbaren Abbildungen c1, c2. Im Ausführungsbeispiel aus Fig. 5 sind a1, a2, w1, w2, c1 und c2 jeweils vier Bit breit.

Gemäß der Erfindung wird durch die Konstruktion der affinen Abbildung A mit invertierbaren Teilmatrizen für die Verschleierungswerte y erreicht, dass wenn man bei festen x die Verschleierungswerte y variiert, für alle möglichen x immer dieselbe Menge M von Teil-Ausgabewerten ai von A entsteht.. Ohne diese spezielle Konstruktion würden im Allgemeinen für unterschiedliche xj verschiedene Mengen Mj entstehen. Die Erfinder bezeichnen in diesem Zusammenhang die Mengen Mj auch als "Bahnen". Die spezielle Konstruktion von A stellt also sicher, dass es nur eine einzige Bahn für die ai gibt. Damit ist sichergestellt, dass die invertierbaren Funktionen ci bahnerhaltend sind. Ansonsten kann durch die invertierbare Abbildung ci eine schädliche Durchmischung der Mengen Mj entstehen. Die spezielle Konstruktion von A stellt also sicher, dass die Abbildungen ci beliebig aus der Gesamtmenge der invertierbaren Abbildungen ausgewählt werden können, und die statistische Ausgeglichenheit der gesamten Funktion f erhalten bleibt.

Wird die Prozessor-Einrichtung in Betrieb genommen und dadurch der kryptographische Algorithmus ausgeführt, z.B. innerhalb einer SoftwareApplikation, dann werden die White Box maskierten Operationen Ti' ausgeführt. Durch das Ausführen der White Box maskierten Operationen Ti' werden insbesondere die DES-spezifischen S-Box Operationen in gehärteter White Box maskierter Form ausgeführt. Da in der Prozessor-Einrichtung weder die S-Boxen S noch die kombinierten S-Boxen T in direkter Form implementiert sind, sondern lediglich die erfindungsgemäß zu T' White Box maskierten S-Box-Operationen, sind Angriffe auf die Prozessor-Einrichtung verhindert oder zumindest erheblich erschwert.

Glossar

S: Rechenschritt, insbesondere DES SBOX oder acht DES S-Boxen, insbesondere bei Standard-Darstellung von DES
T: Operation umfassend Rechenschritt S, bei alternativer DES-Darstellung
T': White Box verschleierter Rechenschritt S, mit S ggf. eingebettet in T
x: Eingabewert in Rechenschritt S (bzw. T)
y: Verschleierungswert
r': expandierte rechte Seite der Eingabe einer Runde
k: Schlüssel
s: Ausgabewert von S (z.B. S-Box)
w: Ausgabewert von T' (maskiertes S)

Im Fall, dass S = DES S-Box oder acht DES S-Boxen:

x = r' XOR k bei Standard-Darstellung von DES
x = r' bei alternativer Darstellung von DES
l = Bits aus linker Seite der Bits am DES-Rundeneingang (32 Bit)
r = Bits aus rechter Seite der Bits am DES-Rundeneingang (32 Bit)
r' = Bits aus expandierter rechter Seite r am DES-Rundeneingang (48 Bit)

Zitierter Stand der Technik

[1] "A Tutorial on White-box AES", James A. Muir, Cryptology ePrint Archive, Report 2013/104, eprint.iacr.org/2013/104
[2] DE 102014016548.5 (eingereicht am 10.11.2014)
[3] "Differential Computation Analysis: Hiding your White-Box Designs is Not Enough", J.W. Bos, Ch. Hubain, W. Michiels, and Ph. Teuwen, eprint.iacr.org/2015/753, abgerufen am 31.7.2015
[4] US 2012/300922 A1
[5] CHOW S ET AL, "A White-Box DES Implementation for DRM Applications", INTERNET CITATION, (2002), URL: http://crypto.stanford.edu/DRM2002/whitebox.pdf, (20080416), XP002476832
[6] CHOW S ET AL, "WHITE-BOX CRYPTOGRAPHY AND AN AES IMPLEMENTATION", INTERNET CITATION, (2002), URL: http://citeseer.ist.psu.edu/732354.html, (20080416)
[7] US 2011/091034 A1

Patentansprüche

1. Prozessor-Einrichtung mit einer darauf implementierten ausführbaren White Box maskierten Implementierung eines kryptographischen Algorithmus, der eingerichtet ist, unter Verwendung eines geheimen Schlüssels K aus einem Eingabetext einen Ausgabetext zu erzeugen, wobei die Implementierung einen implementierten Rechenschritt S umfasst, durch den Eingabewerte x auf Ausgabewerte s = S[x] abgebildet werden, und der mittels einer invertierbaren Funktion f, durch die Ausgabewerte w von f gebildet werden, zu einem White Box maskierten Rechenschritt T' maskiert ist, **dadurch gekennzeichnet, dass**

a) als Abbildung f eine Kombination (f = (c1, c2, ... )*A) aus einer affinen Abbildung A mit einer Eingangsbreite BA und einer Anzahl von einer oder mehreren invertierbaren Abbildungen c1, c2,... mit je einer Eingangsbreite Bc1, Bc2,... vorgesehen ist, wobei BA = Bc1 + Bc2 +..., wobei durch die Abbildung f Ausgabewerte w erzeugt werden;
b) die affine Abbildung A dazu eingerichtet ist, auf Ausgabewerte s des Rechenschritts S und zusätzlich auf einen oder mehrere von den Ausgabewerten s des Rechenschritts S statistisch unabhängige Verschleierungswerte y angewendet zu werden, gemäß a = A(S[x], y) = A(s, y);
c) die ein oder mehreren invertierbaren Abbildungen c1, c2,... dazu eingerichtet sind, Ausgabewerte a der affinen Abbildung A auf Ausgabewerte w der Abbildung f abzubilden, gemäß w = (c1, c2, ...)(A(s,y));
d) die affine Abbildung A durch ein auf die invertierbaren Abbildungen c1, c2,... abgestimmtes Konstruktionsverfahren konstruiert ist, wobei:

d1) die Ausgabewerte a der affinen Abbildung A als Konkatenation von Ausgabewerte-Teilen a = a1 | a2 ... dargestellt werden und die Ausgabewerte w der Abbildung f als Konkatenation von Ausgabewerte-Teilen w = w1 | w2 ... dargestellt werden, wobei die Ausgabewerte-Teile a1, a2 ... und w1, w2 ... jeweils dieselbe Eingangsbreite Bc1, Bc2 ... wie die invertierbaren Abbildungen c1, c2,... besitzen;

d2) ein Eingabewert x=xi festgelegt wird; und

d3) die affine Abbildung A derart ausgewählt oder gebildet ist, dass - bei festgehaltenem Eingabewert xi - durch Anwenden von A auf s = S[xi] mit allen möglichen Verschleierungswerten y alle möglichen Ausgabewert-Teile a1 oder/und alle möglichen Ausgabewert-Teile a2, ... der affinen Abbildung A erzeugt werden, und zwar für mindestens einen einzelnen Ausgabewert-Teil a1, a2, ... oder für jeden einzelnen Ausgabewert-Teil a1, a2, ....

2. Prozessor-Einrichtung nach Anspruch 1, wobei die Anzahl der Verschleierungswerte y gleich der Eingangsbreite Bc1= Bc2= ... der invertierbaren Abbildungen c1, c2, ... festgesetzt wird, und Merkmal d3) umfasst, dass die affine Abbildung A so in Teil-Abbildungen P1, Q1, P2, Q2, ... zerlegt wird, dass gilt: $a1(x,y) = P1(x) +Q1(y)$, $a2(x,y) = P2(x) +Q2(y)$ ..., wobei zumindest eine oder alle der Teil-Abbildungen Q1, Q2 ... invertierbare Abbildungen sind.

3. Prozessor-Einrichtung nach Anspruch 2, wobei die affine Abbildung A eine lineare Abbildung umfasst, die durch eine Matrix MA gebildet ist, die in Spalten und Zeilen organisiert ist, wobei:

   - die Ausgabewerte s des Rechenschritts S einer Anzahl n von Spalten N in der Matrix MA zugeordnet sind und die statistisch unabhängigen Verschleierungswerte y einer Anzahl m von - von den Spalten N getrennten - Spalten M in der Matrix MA zugeordnet sind, wobei die Anzahl m Spalten M für die Verschleierungswerte y gleich der Anzahl m der Verschleierungswerte y ist;
   - die Matrix MA eine invertierbare Teilmatrix umfasst, die gebildet ist: durch diejenigen m Spalten M der Matrix MA, die den Verschleierungswerten y zugeordnet sind, und dieselbe Anzahl m von zueinander benachbarten Zeilen der Matrix MA; insbesondere durch: die letzten m Spalten M der Matrix MA in Kombination mit entweder den ersten, zweiten, ... oder letzten m Zeilen der Matrix MA.

4. Prozessor-Einrichtung nach Anspruch 3, wobei die Anzahl der Verschleierungswerte y vier oder ein ganzzahliges Vielfaches von vier ist, insbesondere acht, und wobei die invertierbare Teilmatrix gebildet ist durch die letzten vier Spalten der Matrix MA und zudem und die ersten, oder die zweiten, oder die dritten ... oder letzten vier Zeilen der Matrix MA, oder dem ganzzahligen Vielfachen entsprechend mehrere derartige Gruppen von vier Spalten und vier Zeilen.

5. Prozessor-Einrichtung nach einem der Ansprüche 1 bis 4, wobei für die Durchführung des Implementierens des White Box maskierten Rechenschritts T' eine den Rechenschritt S darstellende Look-Up Tabelle STab[x] oder eine den Rechenschritt S und die Verschleierungswerte y darstellende Look-Up Tabelle STab[x,y] bereitgestellt worden ist.

6. Prozessor-Einrichtung nach einem der Ansprüche 1 bis 5, wobei der White Box maskierte Rechenschritt T' durch eine White Box maskierte Look-Up Tabelle T'Tab [x, y] dargestellt ist, in der Werte $f(s, y)$ eingetragen sind, insbesondere das Ergebnis der Anwendung der ein oder mehreren invertierbaren Abbildungen c1, c2,... auf $A(s, y)$.

7. Prozessor-Einrichtung nach einem der Ansprüche 1 bis 6, wobei die Implementierung zusätzlich eine weitere, auf Eingabewerte x des Rechenschritts S, oder auf Eingabewerte x des Rechenschritts S und auf Verschleierungswerte y gemäß $g^{-1}(x)$ bzw. $g^{-1}(x, y)$ anzuwendende invertierbare Funktion g umfasst.

8. Prozessor-Einrichtung nach einem der Ansprüche 1 bis 7, wobei als Algorithmus eine Block-Chiffre mit mehreren Runden vorgesehen ist, insbesondere DES oder AES, und als Rechenschritt S:

   - eine oder mehrere SBox-Operationen oder eine oder mehrere inverse SBox-Operationen, jeweils einer Runde; oder
   - eine Kombination aus einer oder mehreren SBox-Operation oder einer oder mehreren inversen SBox-Operation, jeweils einer Runde, mit ein oder mehreren weiteren Operationen der Runde.

9. Prozessor-Einrichtung nach Anspruch 8 mit Algorithmus DES, wobei

   - als Eingabewert x entweder ein oder mehrere expandierte rechte Eingangs-Bits r'i (r'1 | r'2 | ...) einer Runde, oder eine Verknüpfung (x = r'1 XOR k1 | r'2 XOR k2 | ....) eines oder mehrerer expandierter rechter Eingangs-Bits r'i einer Runde mit einem bzw. mehreren Schlüsselbits ki vorgesehen ist bzw. sind; oder / und
   - in die Verschleierungswerte y ein oder mehrere linke Eingangs-Bit li der Runde eingehen; oder/und

**10.** Prozessor-Einrichtung nach Anspruch 8 oder 9 mit Algorithmus DES, wobei die Verschleierungswerte y mittels einer Funktion V aus ein oder mehreren linken Eingangs-Bits li der Runde oder/und ein oder mehreren expandierten rechten Eingangs-Bit r'i der Runde berechnet sind, wobei insbesondere V wahlweise eine lineare Abbildung oder eine Hashfunktion ist.

**11.** Prozessor-Einrichtung nach Anspruch 8, 9 oder 10 mit Algorithmus DES, wobei die weiteren Operationen eine oder mehrere der folgenden umfassen: Permutation P; Expansion E; Addition von linken und rechten Eingangs-Bits l, r oder linken und expandierten rechten Eingangsbits l, r'.

**12.** Prozessor-Einrichtung nach Anspruch 8 mit Algorithmus AES, wobei als Eingabewert x ein Eingabewert oder Teil eines Eingabewerts einer AddRoundKey-Operation oder einer SubBytes-Operation oder einer inversen SubBytes-Operation einer AES-Runde vorgesehen ist; oder / und

- die weiteren Operationen eine oder mehrere der folgenden umfassen: MixColumn-Operation oder ein oder mehrere Teilschritte der MixColumn-Operation oder inverse MixColumn-Operation oder ein oder mehrere Teilschritte der inversen MixColumn-Operation.

**13.** Prozessor-Einrichtung nach einem der Ansprüche 1 bis 12, wobei die Verschleierungswerte y jeweils mittels einer Funktion V aus Bits des Eingabetexts berechnet sind, wobei insbesondere V wahlweise eine lineare Abbildung oder eine Hashfunktion ist.

**14.** Prozessor-Einrichtung nach Anspruch 10 oder 13, wobei der Algorithmus mehrere Runden aufweist und die Funktion V für jede Runde neu gewählt wird.

**15.** Prozessor-Einrichtung nach einem der vorangehenden Ansprüche, wobei der Rechenschritt S dadurch als White Box maskierter Rechenschritt T' auf der Prozessor-Einrichtung implementiert worden ist, dass: (i) der Rechenschritt S durchgeführt worden ist, um Ausgabewerte s zu erzeugen, und (ii) auf die erzeugten Ausgabewerte s des Rechenschritts S und die Verschleierungswerte y die invertierbare Funktion f angewandt worden ist, und ein hierdurch erzieltes Ergebnis T' auf der Prozessor-Eichrichtung implementiert worden ist.

**Claims**

**1.** A processor device having an executable white-box-masked implementation of a cryptographic algorithm implemented thereon, which is configured to generate an output text from an input text while employing a secret key K, wherein the implementation comprises an implemented computation step S by which input values x are mapped to output values s = S[x], and which is masked to a white-box-masked computation step T' by means of an invertible function f, by which output values w of f are formed, **characterized in that**

a) as a mapping f, a combination (f = (c1, c2, ...)*A) is provided of an affine mapping A having an entry width BA and a number of one or several invertible mappings c1, c2, ... having an entry width Bc1, Bc2, ... respectively, wherein BA = Bc1 + Bc2 + ..., wherein through the mapping f output values w are generated;
b) the affine mapping A is configured to be applied to output values s of the computation step S and additionally to one or several obfuscation values y which are statistically independent of the output values s of the computation step S, according to a = A(S[x], y) = A(s, y);
c) the one or several invertible mappings c1, c2, ... are configured to map output values a of the affine mapping A to output values w of the mapping f, according to w = (c1, c2, ...)(A (s,y));
d) the affine mapping A is constructed by a construction method coordinated with the invertible mappings c1, c2, ..., wherein:

d1) the output values a of the affine mapping A are represented as a concatenation of output-value parts a = a1 | a2 ... and the output values w of the mapping f are represented as a concatenation of output-value parts w = w1 | w2 ..., wherein output-value parts a1, a2, ... and w1, w2, ... respectively have the same entry width Bc1, Bc2, ... as the invertible mappings c1, c2, ...;
d2) an input value x=xi is set; and
d3) the affine mapping A is selected or formed such that - for fixed input value xi - by applying A on s = S [xi] with all possible obfuscation values y, all possible output-value parts a1 or/and all possible output-value parts a2, ... of the affine mapping A are generated, namely for at least one individual output-value part a1, a2, ... or for each individual output-value part a1, a2, ....

**2.** The processor device according to claim 1, wherein the number of obfuscation values y is stipulated equal to the entry width Bc1 = Bc2 = ... of the invertible mappings c1, c2, ... and comprises feature d3), that the affine mapping A is split up into partial mappings P1, Q1, P2, Q2, ... so that it holds: a1(x,y) = P1(x) +Q1(y), a2(x,y) = P2(x) +Q2(y) ..., wherein at least one or all of the partial mappings Q1, Q2, ...

are invertible mappings.

3. The processor device according to claim 2, wherein the affine mapping A comprises a linear mapping which is formed by a matrix MA, which is organized in columns and rows, wherein:

- the output values s of the computation step S are associated with a number n of columns N in the matrix MA and the statistically independent obfuscation values y are associated with a number m of columns M - separated from columns N - in the matrix MA, wherein the number m columns M for the obfuscation values y is equal to the number m of the obfuscation values y;
- the matrix MA comprises an invertible partial matrix which is formed: by those m columns M of the matrix MA which are associated with the obfuscation values y, and the same number m of mutually adjacent rows of the matrix MA; in particular by the last m columns M of the matrix MA in combination with either the first, second, ... or last m rows of the matrix MA.

4. The processor device according to claim 3, wherein the number of obfuscation values y is four or an integral multiple of four, in particular eight, and the invertible partial matrix is formed by the last four columns of the matrix MA and in addition the first, or the second, or the third ... or last four rows of the matrix MA, or according to the integral multiple, several such groups of four columns and four rows.

5. The processor device according to any of claims 1 to 4, wherein for carrying out the implementation of the white-box-masked computation step T' there has been supplied a look-up table STab[x] representing the computation step S, or a look-up table STab[x,y] representing the computation step S and the obfuscation values y.

6. The processor device according to any of claims 1 to 5, wherein the white-box-masked computation step T' is represented by a white-box-masked look-up table T'Tab [x, y] in which values f(s, y) are recorded, in particular the result of the application of one or several invertible mappings c1, c2, ... to A(s, y).

7. The processor device according to any of claims 1 to 6, wherein the implementation additionally comprises a further invertible function g to be applied to input values x of the computation step S, or to input values x of the computation step S and to obfuscation values y according to $g^{-1}(x)$ or $g^{-1}(x, y)$.

8. The processor device according to any of claims 1 to 7, wherein there is provided as an algorithm a block cipher having several rounds, in particular DES or AES, and as a computation step S:

- one or several SBox operations or one or several inverse SBox operations, respectively of one round; or
- a combination of one or several SBox operations or one or several inverse SBox operations, respectively of one round, with one or several further operations of the round.

9. The processor device according to claim 8 with algorithm DES, wherein

- as an input value x, there is/are provided either one or several expanded right entry bits r'i (r'1 | r'2 | ...) of a round, or a linkage (x = r'1 XOR k1 | r'2 XOR k2 | ....) of one or several expanded right entry bits r'i of a round with one or several key bits ki; or/and
- one or several left entry bits li of the round go into the obfuscation values y; or/and

10. The processor device according to claim 8 or 9 having algorithm DES, wherein the obfuscation values y are computed by means of a function V from one or several left entry bits li of the round or/and from one or several expanded right entry bits r'i of the round, wherein in particular V is electively a linear mapping or a hash function.

11. The processor device according to claim 8, 9 or 10 having algorithm DES, wherein the further operations comprise one or several of the following: permutation P; expansion E; addition of left and right entry bits l, r or left and expanded right entry bits l, r'.

12. The processor device according to claim 8 having algorithm AES, wherein there is provided as an input value x an input value or part of an input value of an AddRoundKey operation or a SubBytes operation or an inverse SubBytes operation of an AES round; or/and

- the further operations comprise one or several of the following: MixColumn operation or one or several substeps of the MixColumn operation or inverse MixColumn operation or one or several substeps of the inverse MixColumn operation.

13. The processor device according to any of claims 1 to 12, wherein the obfuscation values y are computed respectively by means of a function V from bits of the input text, wherein in particular V is electively a linear mapping or a hash function.

14. The processor device according to claim 10 or 13, wherein the algorithm has several rounds and the function V is newly chosen for every round.

15. The processor device according to any of the preceding claims, wherein the computation step S has been implemented on the processor device as a white-box-masked computation step T' in that: (i) the computation step S has been carried out to generate output values s, and (ii) the invertible function f has been applied to the generated output values s of the computation step S and the obfuscation values y, and a thereby achieved result T' has been implemented on the processor device.

**Revendications**

1. Dispositif à processeur sur lequel est implémentée une implémentation exécutable, masquée en boîte blanche, d'un algorithme cryptographique conçu pour, en utilisant une clé secrète K, générer à partir d'un texte en entrée un texte en sortie, cependant que l'implémentation comprend une étape de calcul S implémentée par laquelle des valeurs d'entrée x sont appliquées sur des valeurs de sortie s = S[x] et qui, au moyen d'une fonction inversible f par laquelle des valeurs de sortie w de f sont constituées, est masquée en une étape de calcul T' masquée en boîte blanche,

   **caractérisé en ce que**

   a) en tant qu'application f, une combinaison (f = (c1, c2, ... )*A) d'une application affine A ayant une largeur d'entrée BA et d'un nombre d'une ou plusieurs d'applications inversibles c1, c2, ... ayant chacune une largeur d'entrée Bc1, Bc2, ... est prévue, cependant que BA = Bc1 + Bc2 + ..., cependant que, par l'application f, des valeurs de sortie w sont générées ;

   b) l'application affine A est conçue pour être utilisée sur des valeurs de sortie s de l'étape de calcul S, et en plus sur une ou plusieurs valeurs d'obfuscation y statistiquement indépendantes des valeurs de sortie s de l'étape de calcul S, suivant a = A(S[x], y) = A(s, y) ;

   c) les une ou plusieurs applications inversibles c1, c2, ... sont conçues pour appliquer des valeurs de sortie a de l'application affine A sur des valeurs de sortie w de l'application f, suivant w = (c1, c2, ...)(A(s, y)) ;

   d) l'application affine A est construite par un procédé de construction accordé avec les applications inversibles c1, c2, ... , cependant que :

      d1) les valeurs de sortie a de l'application affine A sont représentées comme concaténation de parties de valeur de sortie a = a1 | a2 ..., et que les valeurs de sortie w de l'application f sont représentées comme concaténation de parties de valeur de sortie w = w1 | w2 ..., cependant que les parties de valeur de sortie a1, a2 ... et w1, w2 ... possèdent respectivement la même largeur d'entrée Bc1, Bc2 ... que les applications inversibles c1, c2, ... ;

      d2) une valeur d'entrée x = xi est fixée ; et

      d3) l'application affine A est choisie ou constituée de telle façon que, quand la valeur d'entrée xi est retenue, par application de A sur s = S[xi] avec toutes les valeurs d'obfuscation y possibles, toutes les parties possibles de valeur de sortie a1 et/ou toutes les parties possibles de valeur de sortie a2, ... de l'application affine A sont générées, à savoir pour au moins une partie individuelle de valeur de sortie a1, a2, ... ou pour chaque partie individuelle de valeur de sortie a1, a2, ....

2. Dispositif à processeur selon la revendication 1, cependant que le nombre des valeurs d'obfuscation y est établi de manière égale à la largeur d'entrée Bc1= Bc2 = ... des applications inversibles c1, c2, ..., et que la caractéristique d3) comprend que l'application affine A est fractionnée de telle manière en applications partielles P1, Q1, P2, Q2, ... qu'il est établi que a1(x,y) = P1(x) + Q1(y), a2(x,y) = P2(x) + Q2(y), ..., cependant qu'au moins une ou toutes des applications partielles Q1, Q2 ... sont des applications inversibles.

3. Dispositif à processeur selon la revendication 2, cependant que l'application affine A comprend une application linéaire constituée par une matrice MA qui est organisée en colonnes et en lignes, cependant que :

   - les valeurs de sortie s de l'étape de calcul S d'un nombre n de colonnes N sont affectées dans la matrice MA et que les valeurs d'obfuscation y statistiquement indépendantes, d'un nombre m de colonnes M - séparées des colonnes N - sont affectées dans la matrice MA, cependant que le nombre m de colonnes M pour les valeurs d'obfuscation y est égal au nombre m des valeurs d'obfuscation y ;

   - la matrice MA comprend une matrice partielle inversible constituée : par les m colonnes M de la matrice MA qui sont affectées aux valeurs d'obfuscation y, et le même nombre m de lignes voisines entre elles de la matrice MA ; en particulier par : les dernières m colonnes M de la matrice MA en combinaison avec soit les premières, deuxièmes, ... ou dernières m lignes de la matrice MA.

**4.** Dispositif à processeur selon la revendication 3, cependant que le nombre des valeurs d'obfuscation est quatre ou un multiple entier de quatre, en particulier huit, et cependant que la matrice partielle inversible est constituée par les quatre dernières colonnes de la matrice MA et, en outre, et les quatre premières ou deuxièmes ou troisièmes ... ou dernières lignes de la matrice MA, ou plusieurs groupes de ce genre, correspondant au multiple entier, de quatre colonnes et quatre lignes.

**5.** Dispositif à processeur selon une des revendications de 1 à 4, cependant que, pour l'exécution de l'implémentation de l'étape de calcul T' masquée en boîte blanche, une table de consultation STab[x] représentant l'étape de calcul S ou une table de consultation Stab[x,y] représentant l'étape de calcul S et les valeurs d'obfuscation y a été mise à disposition.

**6.** Dispositif à processeur selon une des revendications de 1 à 5, cependant que l'étape de calcul T' masquée en boîte blanche est représentée par une table de consultation T'Tab[x,y] masquée en boîte blanche dans laquelle des valeurs f(s,y) sont enregistrées, en particulier le résultat de l'application de la une ou des plusieurs applications inversibles c1, c2, ... sur A(s,y).

**7.** Dispositif à processeur selon une des revendications de 1 à 6, cependant que l'implémentation comprend en outre une autre fonction inversible g à utiliser sur des valeurs d'entrée x de l'étape de calcul S, ou sur des valeurs d'entrée x de l'étape de calcul S et des valeurs d'obfuscation y suivant $g^{-1}(x)$ ou $g^{-1}(x,y)$.

**8.** Dispositif à processeur selon une des revendications de 1 à 7, cependant que, comme algorithme, un chiffre bloc à plusieurs rondes est prévu, en particulier DES ou AES, et comme étape de calcul S :

- une ou plusieurs opérations Sbox ou une ou plusieurs opérations inverses Sbox, respectivement une ronde ; ou
- une combinaison d'une ou de plusieurs opérations Sbox ou d'une ou de plusieurs opérations inverses Sbox, respectivement une ronde, avec une ou plusieurs autres opérations de la ronde.

**9.** Dispositif à processeur selon la revendication 8 avec algorithme DES, cependant que,

- comme valeur d'entrée x, soit un ou plusieurs bits d'entrée droits étendus r'i (r' 1 | r'2 ...) d'une ronde, soit un lien (x = r' 1 XOR k1 | r'2 XOR k2 | ...) d'un ou de plusieurs bits d'entrée droits étendus r'i d'une ronde avec un ou plusieurs bits de clé ki est ou sont prévus ; ou / et

- un ou plusieurs bit d'entrée gauches li de la ronde entrent dans les valeurs d'obfuscation y, et/ou

**10.** Dispositif à processeur selon la revendication 8 ou 9 avec algorithme DES, cependant que les valeurs d'obfuscation y sont calculées au moyen d'une fonction V d'un ou de plusieurs bits d'entrée gauches li de la ronde ou / et d'un ou de plusieurs bits d'entrée droits étendus r'i de la ronde, cependant que, en particulier, V est au choix une application linéaire ou une fonction de hachage.

**11.** Dispositif à processeur selon une des revendications de 8, 9 ou 10 avec algorithme DES, cependant que les autres opérations comprennent une ou plusieurs des suivantes : permutation P ; expansion E ; addition de bits d'entrée gauches et droits 1, r ou de bits d'entrée gauches et droits étendus 1, r'.

**12.** Dispositif à processeur selon la revendication 8 avec algorithme AES, cependant que, comme valeur d'entrée x, une valeur d'entrée ou partie d'une valeur d'entrée d'une opération AddRoundKey ou d'une opération SubBytes ou d'une opération inverse SubBytes d'une ronde AES est prévue ; et / ou

- les autres opérations comprennent une ou plusieurs des suivantes : opération MixColumn ou une ou plusieurs étapes partielles de l'opération MixColumn ou opération inverse MixColumn ou une ou plusieurs étapes partielles de l'opération inverse MixColumn.

**13.** Dispositif à processeur selon une des revendications de 1 à 12, cependant que les valeurs d'obfuscation y sont respectivement calculées au moyen d'une fonction V de bits du texte en entrée, cependant que, en particulier, V est au choix une application linéaire ou une fonction de hachage.

**14.** Dispositif à processeur selon la revendication 10 ou 13, cependant que l'algorithme comporte plusieurs rondes et que la fonction V est à nouveau choisie pour chaque ronde.

**15.** Dispositif à processeur selon une des revendications précédentes, cependant que l'étape de calcul S a été, sur le dispositif à processeur, implémentée en tant qu'étape de calcul T' masquée en boîte blanche par le fait que : (i) l'étape de calcul S a été exécutée afin de générer des valeurs de sortie s, et (ii) que, sur les valeurs de sortie s générées de l'étape de calcul S et sur les valeurs d'obfuscation y, la fonction inversible f a été utilisée, et qu'un résultat T' ainsi obtenu a été implémenté sur le dispositif à processeur.

Fig. 1

Fig. 2

$$R^{j+1} = \bigoplus_{i=0}^{9} R_i^{j+1}, \quad L^{j+1} = \bigoplus_{i=0}^{9} L_i^{j+1}$$ **Fig. 3**

Multiplikation der Matrix der linearen Abbildung $A$ mit einem Datenvektor:

$$a = A(s,y) \qquad\qquad A = MA \qquad\qquad (s,y) = (S(x),y)$$

Jedes $\alpha_i$ ist eine Linearkombination der $s_j$ und $y_j$:

invertierbare Teilmatrix

$$\alpha_i = \sum_{j=0}^{n-1} a_{i,j} s_j + \sum_{j=0}^{m-1} a_{i,n+j} y_j$$

**Fig. 4**

*( Fig. 4: n = 4 )*

s(x1)
4Bit

y
4Bit

*( Fig. 4: m = 4 )*

$a1 = \alpha_0\alpha_1\alpha_2\alpha_3$ (4 Bit)
$a2 = \alpha_4\alpha_5\alpha_6\alpha_7$ (4 Bit)

$w1 = \sigma_0\sigma_1\sigma_2\sigma_3$ (4 Bit)
$w2 = \sigma_4\sigma_5\sigma_6\sigma_7$ (4 Bit)

s(x2)

y

s(x3) ...

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014016548
- WO 102014016548 A
- US 2012300922 A1
- US 2011091034 A1

**In der Beschreibung aufgeführte Nicht-Patentliteratur**

- **J.W. BOS ; CH. HUBAIN ; W. MICHIELS ; PH. TEUWEN.** *Differential Computation Analysis: Hiding your White-Box Designs is Not Enough, eprint.iacr.org/2015/753*
- **CHOW S et al.** A White-Box DES Implementation for DRM Applications. *INTERNET CITATION,* 2002, http://crypto.stanford.edu/DRM2002/whitebox.pdf
- **CHOW S et al.** WHITE-BOX CRYPTOGRAPHY AND AN AES IMPLEMENTATION. *INTERNET CITATION,* 2002, http://citeseer.ist.psu.edu/732354.html
- **JAMES A. MUIR.** A Tutorial on White-box AES. *Cryptology ePrint Archive*
- **J.W. BOS ; CH. HUBAIN ; W. MICHIELS ; PH. TEUWEN.** *Differential Computation Analysis: Hiding your White-Box Designs is Not Enough,* 31. Juli 2015, eprint.iacr.org/2015/753